(19) Europäisches Patentamt
European Patent Office
Office européen des brevets

(11) **EP 4 039 971 A1**

(12) **EUROPEAN PATENT APPLICATION**

(43) Date of publication:
**10.08.2022 Bulletin 2022/32**

(21) Application number: **21155898.6**

(22) Date of filing: **09.02.2021**

(51) International Patent Classification (IPC):
**F03D 17/00** (2016.01)    **G01P 15/09** (2006.01)

(52) Cooperative Patent Classification (CPC):
**F03D 17/00; G01P 15/09;** F05B 2220/709;
F05B 2270/821

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Gamesa Renewable Energy
A/S**
**7330 Brande (DK)**

(72) Inventors:
• **Bernhammer, Lars Oliver**
**9400 Nørresundby (DK)**

• **Fremmelev, Mads Anker**
**9000 Aalborg (DK)**
• **Ladpli, Purim**
**9530 Støvring (DK)**
• **Orlowitz, Esben**
**7200 Grindsted (DK)**

(74) Representative: **Aspacher, Karl-Georg et al
Siemens Gamesa Renewable Energy GmbH & Co.
KG
Otto-Hahn-Ring 6
81739 München (DE)**

(54) **WIND TURBINE ROTOR BLADE**

(57)    The invention describes a wind turbine rotor blade (20) comprising a reinforcement element (20C) embedded in the body of the rotor blade (20) and extending in a longitudinal direction of the rotor blade; a number of piezo-electric transducers (10) arranged between the leading edge (LE) of the rotor blade (20) and the reinforcement element (20C); a number of piezo-electric transducers (10) arranged between the reinforcement element (20C) and the trailing edge (TE) of the rotor blade (20); and a connector arrangement (12) configured to apply an excitation signal (10B, 10C) to any one of the piezo-electric transducers (10), and to transmit a sensed signal ($10B_{S1}$, $10B_{S2}$, $10C_{S1}$, $10C_{S2}$) from any one of the piezo-electric transducers (10) to an evaluation module (142). The invention further describes a wind turbine (2) comprising a number of such rotor blades (20); and a method of measuring strain in a reinforcement element (20C) arranged in such a rotor blade (20).

FIG 1

**Description**

The invention describes a wind turbine rotor blade; a wind turbine; and a method of measuring loads on a reinforcement element embedded in the body of a wind turbine rotor blade.

Background

Wind turbine rotor blades are generally made primarily from layers of glass-fibre material embedded in a synthetic resin such as epoxy resin or other type of polymer resin. Particularly in the case of longer rotor blades, which must be able to withstand very high loads, it can be beneficial to embed high-stiffness reinforcing components in the laminate structure of the rotor blade body. Carbon-fibre is being used in the manufacture of wind turbine rotor blades because it can impart stiffness to a rotor blade without adding significantly to the overall weight. The inclusion of carbon-fibre structural reinforcing elements leads to a number of further considerations. Since carbon is electrically conductive, any carbon-fibre structural reinforcing element must be included in the lightning protection arrangement, for example be providing an electrical connection between the carbon-fibre structure and a down conductor.

It is known to equip a wind turbine rotor blade with various sensors in order to be able to measure the loads acting on the rotor blade during operation of the wind turbine. Strain gauges can be mounted on a surface of the rotor blade body, or embedded in the composite structure. Thin wires or leads can be used to connect the strain gauges to a transmitter, or directly to an evaluation module. However, it can be difficult to deploy electrical sensors in the vicinity of a carbon reinforcing element, on account of internal sparking or the risk of flash-over, and such electrical sensors would compromise the lightning protection system. A lightning strike could result in damage to data acquisition equipment electrically connected to the sensors. For these reasons, an electrical strain gauge or other electrically conductive sensor may not be placed within a minimum distance - for example 20 cm - of a carbon-fibre reinforcing element or an LPS component. These restrictions greatly limit the number of sensors that can be deployed in a rotor blade with embedded carbon-fibre reinforcements, and any load measurements based on such a limited number of sensors are incomplete and cannot be regarded as reliable indications of actual loads.

However, it is mandatory to be able to monitor or measure mechanical loads, stress, strain etc., as part of load validation and load certification of a wind turbine. Furthermore, it is important to be able to assess the magnitude of the loads acting on the rotor blade and its embedded structures during operation of the wind turbine, so that a wind turbine controller can adjust the operating references if necessary in order to avoid damage.

To overcome these problems, it has been proposed to implement optical strain gauges that do not include any conductive parts. However, it is very costly to implement such optical strain gauges at reinforcing structures such as carbon-fibre spar caps, since it is difficult to place the optical strain gauges between the spar cap and the shear web or beam, and the spar cap cannot be accessed directly from the inside of the rotor blade. It is generally also not practicable to arrange such optical strain gauges at the outside surface of the rotor blade, because they are relatively large and would alter the aerodynamic profile of the rotor blade, and because any such externally attached body may eventually detach and fail. In another approach, fibre-optic strain gauges may be deployed, by gluing optical fibres onto the external surface of a rotor blade and manually over-laminating these. Such a solution has been shown to lack robustness and to deliver erroneous measurements.

It is therefore an object of the invention to provide an improved way of measuring loads in a rotor blade with an embedded carbon-fibre reinforcing structure.

This object is achieved by the wind turbine rotor blade of claim 1; by the wind turbine of claim 8; and by the method of claim 11 of evaluating the structural integrity of a carbon-fibre reinforcement element embedded in the body of a rotor blade.

Description

According to the invention, the wind turbine rotor blade comprises a reinforcement element embedded in the body of the rotor blade and extending in a longitudinal (i.e. span-wise) direction of the rotor blade, so that one "long" side of the reinforcement element is essentially aligned relative to the leading edge of the rotor blade and its other "long" side is essentially aligned relative to the trailing edge of the rotor blade. A longitudinal axis of the reinforcement element may be aligned more or less along the longitudinal axis of the rotor blade in the usual manner. The inventive rotor blade further comprises a number of piezo-electric transducers arranged at a distance removed from one long side of the reinforcement element, and also a number of piezo-electric transducers arranged at a distance removed from the other long side of the reinforcement element. One set of piezo-electric transducers is therefore closer to the leading edge, and the other set is closer to the trailing edge of the rotor blade. The inventive rotor blade further comprises a connector arrangement, e.g. a set of wires or leads, for applying an excitation signal to any one of the piezo-electric transducers, and for relaying a sensed signal from a piezo-electric transducer to an evaluation module.

In the context of the invention, a piezo-electric transducer shall be understood to respond to an excitation voltage by vibration. The amplitude and frequency of vibration is directly related to the amplitude and frequency of the excitation signal. Equally, such a piezo-electric transducer shall be understood to respond to vibration by generating a corresponding voltage or "sensed signal". The skilled person will be familiar with the principle of operation of such piezo-electric devices. The amplitude and frequency of the vibration generated in response to an electrical excitation signal essentially "mirror" the amplitude and frequency of the voltage applied to the transducer. Similarly, the amplitude and frequency of the voltage generated by a sensing transducer essentially "mirror" the amplitude and frequency of the sensed vibrations. In the following, therefore, the same terms may be used to refer to an excitation voltage and the resulting vibration, or to a sensed vibration and the resulting voltage.

An advantage of the inventive rotor blade is that the load acting on a reinforcement element embedded in the rotor blade can be estimated reliably during operation of the wind turbine. This information can then be used to adjust the wind turbine operating parameters in order to avoid over-loading the reinforcement element (or the rotor blade). As the skilled person will be aware, structural elements of a rotor blade are manufactured to withstand loads up to a certain magnitude. The information obtained from signals sensed by the piezo-electric transducers can also be used to adjust the wind turbine operating parameters in order to increase output power if it can be established that the reinforcement elements are under-loaded.

According to the invention, the wind turbine comprises a number of such rotor blades mounted to a hub; an excitation module configured to apply an excitation signal to any one of the piezo-electric transducers; and an evaluation module configured to evaluate a signal received from a piezo-electric transducer.

According to the invention, the method of evaluating the structural integrity of a reinforcement element embedded in the body of a rotor blade of such a wind turbine comprises the steps of selecting a piezo-electric transducer on one side of a reinforcement element, operating the excitation module to apply an excitation signal to the selected transmitter; and operating the evaluation module to evaluate a signal received by a piezo-electric transducer on the other side of the reinforcement element.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that a reinforcement element is a spar cap arranged at an outer end of the shear web of a spar. Generally, the shear web is arranged essentially perpendicular to the chord, and a spar cap is arranged in a transverse direction relative to the shear web.

A reinforcement element may have a laminar structure, i.e. it may comprise layers of reinforcing material bonded by resin. An exemplary reinforcing element may be made of pultruded carbon-fibre elements, bonded together to form a long and essentially flat structure that can be embedded in the rotor blade body, for example by mounting at either end of the shear web of a spar. In the following, without restricting the invention in any way, it may be assumed that the reinforcement element comprises carbon-fibre material.

The terms "carbon-fibre spar cap", "carbon spar cap" or simply "spar cap" may be used interchangeably in the following. Unless otherwise indicated, it shall be assumed that the term "spar cap" refers to a spar cap made of carbon-fibre reinforced material, for example stacks of pultruded carbon-fibre layers bonded by resin. Such a pre-fabricated carbon spar cap is generally arranged in the desired position between layers of glass-fibre matting during the composite layup step when moulding a rotor blade, as will be known to the skilled person.

As explained above, the piezo-electric transducers are of the type that convert between an electrical signal and mechanical vibration, i.e. a piezo-electric transducer converts an electrical signal into mechanical vibration and vice versa. The expressions "sensed signal" and "received signal" shall be understood to be synonyms and may be used interchangeably herein. As the skilled person will be aware, various suitable types of piezo-electric transducers could be used. For example, piezoelectric ceramic elements such as piezoelectric discs, plates, rings, or cylinders can be used. Discs with a diameter in the order of 5 - 25 mm and a thickness in the order of 0.2 - 3 mm may be deployed. Such devices may be mounted onto a surface of the rotor blade. Equally, such devices may be embedded with relative ease in the composite layer structure of a rotor blade body. The invention can be realised using stacked piezoelectric actuators, for example to generate a suitably strong acoustic vibration if design constraints require that opposing pairs of transducers must be placed relatively far apart. A "piezo-electric transducer" may be referred to simply as "transducer" in the following.

In a particularly preferred embodiment of the invention, the rotor blade comprises a plurality of piezo-electric transducers in linear arrangements or "strings" on either side of a carbon spar cap. Each pair of opposing transducers can be arranged "in line", i.e. along a line that is essentially perpendicular to the long axis of the spar cap. Each linear arrangement of piezo-electric transducers is connected by an electrical conductor to an excitation module and/or to an evaluation module. For example, the piezo-electric transducers on one side of a carbon spar can be used only as "transmitters" (i.e. to generate vibration in response to an excitation voltage), and the piezo-electric transducers on the other side of that carbon spar are used only as "receivers" or "sensors" (i.e. to generate a voltage in response to a sensed vibration). Alternatively, the piezo-electric transducers on either side of a carbon spar can be used alternately as "transmitters" and as "sensors", by connecting the piezo-electric transducers in an appropriate manner to both excitation module and evaluation module.

The excitation signal can be of any suitable nature. In a preferred embodiment of the invention, the excitation signal is a burst, for example a brief sequence of oscillations in a well-defined envelope.

In a preferred embodiment of the invention, the evaluation module is configured to compute the time-of-flight between an excitation signal and a received signal. This can be done by identifying a landmark peak in the received signal that corresponds to an equivalent landmark peak of the excitation signal.

In a preferred embodiment of the invention, the evaluation module is configured to compute the attenuation of the received signal relative to the excitation signal.

Of course, as other - more complex - signal parameters can be extracted using appropriate signal processing techniques such as wavelet transform, Hilbert transform, matching pursuit signal decomposition, etc.

In a further preferred embodiment of the invention, the excitation signal is a continuous signal such as a sinusoidal signal. Such an approach may be preferred if the spar cap strain can be reliably estimated from signal attenuation.

Evaluation of a sensed signal can be performed by comparing the sensed signal to an expected signal. This can be done on the basis of previously collected calibration data, for example. It is known to subject a rotor blade of a particular type to cyclic load tests in order to estimate the expected lifetime of the rotor blade, to determine maximum allowable loads, to measure deflection under load, etc. Such a load testing procedure can also be used to collect relevant information for the inventive method. In one approach, transducers are selectively actuated while the rotor blade is in a non-loaded state, and sensed signals are collected. Subsequently, the rotor blade is subject to a known load, and sensed signals are again collected. Since the load is known, it is possible to establish the spar cap strain, and a relationship can be established between strain and the observed sensed signal. Later, during operation of a wind turbine, it is straightforward to evaluate a sensed signal to estimate the momentary strain in the corresponding spar cap.

To actuate the transducers and evaluate the sensed signals, a wind turbine is preferably equipped with a suitable control unit, which can for example be installed in the hub. The control unit preferably includes an excitation module for applying an excitation signal to one or more transducers. This can be done at regular intervals during operation of the wind turbine, or in response to a command from a controller, for example. The control unit may also comprise an evaluation module for receiving and processing the resulting sensed signals. Of course, the evaluation module need not be realised "locally". Instead, the control unit may be configured to forward any sensed signals to a remote park controller, for example, for evaluation and processing. Either way, the results of evaluation and processing of the sensed signals can be used to adjust control references of the wind turbine, for example to increase power output if the rotor blades are not excessively loaded, or to decrease power output or adjust the rotor blade pitch if the rotor blade is experiencing unfavourably high loads.

In one embodiment of the inventive rotor blade, the reinforcing elements are spar caps on either side of the shear web of a spar in a region of maximum airfoil thickness of the rotor blade. A linear arrangement of piezo-electric transducers is arranged on either side of the spar cap at the suction side of the rotor blade, and another linear arrangement of piezo-electric transducers is arranged on either side of the spar cap at the pressure side of the rotor blade. In such an embodiment, a total of four strings of piezo-electric transducers is embedded in the rotor blade.

In a further preferred embodiment of the inventive rotor blade, in addition to the carbon spar caps in the region of maximum airfoil thickness as explained above, the rotor blade also includes a smaller spar closer to the trailing edge, and the spar caps of this smaller spar can also be reinforcement elements in the context of the invention. It shall be appreciated that such a "trailing edge spar" and its spar caps may be smaller than the main spar and its spar caps. In such an embodiment, a total of eight strings of piezo-electric transducers may be embedded in the rotor blade, with two strings of transducers on either side of each spar cap. In a further preferred embodiment of the invention, the number of piezo-electric transducers can be reduced by arranging a single string between a spar cap of the main spar and a spar cap of the trailing edge spar on the suction side, and by arranging a single string between the spar cap of the main spar and the spar cap of the trailing edge spar on the pressure side. In such an embodiment, a total of six piezo-electric transducer strings is sufficient to estimate the strain on four carbon spar caps.

Of course, the reinforcement element does not need to be a spar cap, and can simply be a laminar reinforcing structure embedded in any region of the rotor blade. The invention is particularly advantageous when applied to a reinforcement element that is inherently conductive as explained above, since the transducers are positioned at a safe distance and do not pose a risk from flashover during a lightning event.

The inventive method allows strain or load on a reinforcement structure to be measured indirectly, i.e. without the need to place a sensor directly on the reinforcement structure itself. This makes the invention particularly suitable for measuring strain and load in hard-to-reach or inaccessible regions of rotor blade, for example in or close to the trailing edge, or in the thin tip end of the rotor blade.

Other objects and features of the present invention will become apparent from the following detailed descriptions considered in conjunction with the accompanying drawings. It is to be understood, however, that the drawings are designed solely for the purposes of illustration and not as a definition of the limits of the invention.

Figure 1 shows a wind turbine equipped with rotor blades according to an embodiment of the invention;

Figure 2 shows a cross-section through a rotor blade according to an embodiment of the invention;

Figure 3 illustrates a stage in the inventive method;

Figures 4 - 7 show exemplary signals in one implementation of the inventive method;

Figures 8 and 9 illustrate a further stage in the inventive method;

Figures 10 - 12 illustrate a further implementation of the inventive method;

Figure 13 shows a cross-section through a rotor blade according to a further embodiment of the invention.

In the diagrams, like numbers refer to like objects throughout. Objects in the diagrams are not necessarily drawn to scale.

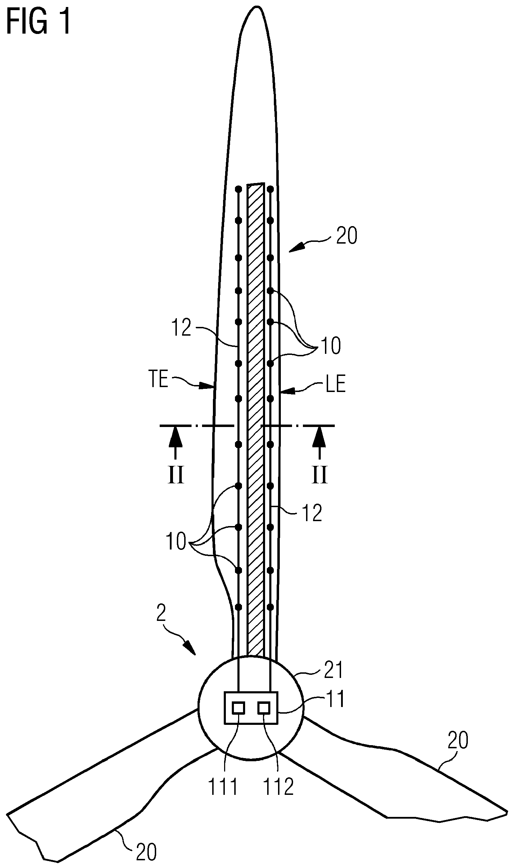

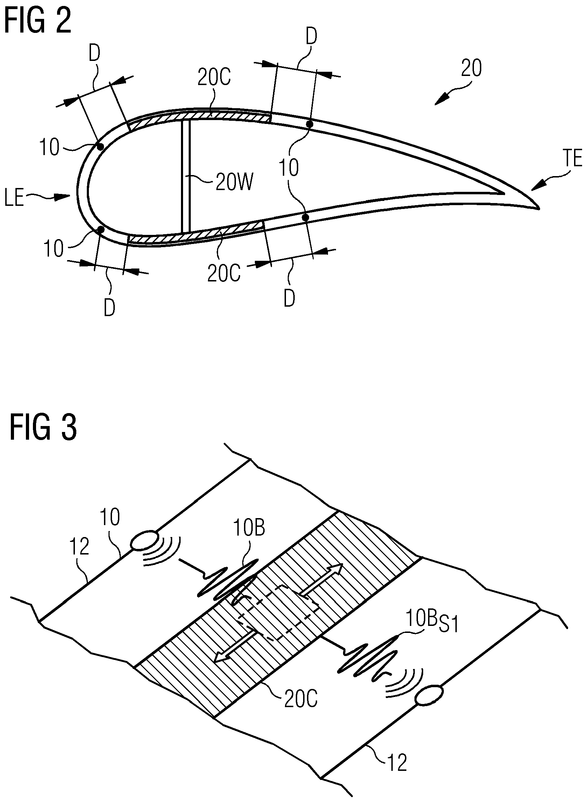

Figure 1 is a schematic drawing showing relevant parts of a wind turbine 2 equipped with rotor blades 20 according to an embodiment of the invention. The diagram shows one of three rotor blades 20 mounted to a hub 21. Each rotor blade 20 incorporates a reinforcing structure 20C made of carbon-fibre, embedded in the body of the rotor blade 20. This is illustrated in Figure 2, which shows a cross-section II-II' through the rotor blade 20 of Figure 1, and indicates a carbon-fibre reinforcing structure 20C as a spar cap on either end of the shear web 20W of a spar. The carbon-fibre reinforcing structures 20C are referred to as "spar caps", and the spar (shear web and spar caps) serves to increase the structural strength of the rotor blade 20.

In this exemplary embodiment, piezo-electric transducers 10 are embedded in the body of the rotor blade 20, in an essentially linear arrangement, along each side of the spar cap 20C as shown in Figure 1. Each transducer 10 is located at a distance D from the conductive carbon-fibre spar cap 20, as indicated in Figure 2, in order to comply with an electrical safety requirements as explained in the introduction. The distance D between transducer 10 and spar cap 20C is not necessarily the same for each transducer 10, it is only important that this distance D is at least as large as the minimum distance defined by appropriate regulations or requirements. The transducers 10 are connected by wires to a control unit 11. The wires can be embedded in the rotor blade body, or may be arranged along a surface in the interior of the rotor blade. In an alternative embodiment, the piezo-electric transducers 10 could be mounted on a surface of the rotor blade 20.

Figure 1 also shows a control unit 11 installed in the hub 21, and includes an excitation module 111 for applying an excitation signal to one or more transducers 10, and also an evaluation module 112 for receiving and processing the resulting sensed signals. Of course, the evaluation module 112 need not be realised "locally" as shown here. Instead, the control unit 11 may be configured to forward any sensed signals to a remote location for evaluation and processing. As explained above, the results of evaluation and processing of the sensed signals can be used to adjust control references of the wind turbine, so that output power can be maximised while avoiding excessive loading on the rotor blades.

Figure 3 illustrates a stage in the inventive method. The diagram shows a pair of transducers 10 on either side of a spar cap 20C. Each transducer 10 can transmit and receive, so that any transducer 10 can be actuated to vibrate when it receives an electrical excitation signal; and each transducer 10 can generate an electrical signal in response to excitation through vibration. The diagram illustrates this effect, indicating vibrations 10B propagating through the spar cap 20 as a result of excitation of the transducer 10 on the left (the "transmitting" transducer) by a burst signal; and the attenuated/distorted vibrations which will be received by the transducer 10 on the right (the "receiving" or "sensing" transducer). The invention makes use of the fact that the spar cap 20C is embedded between layers of composite fibreglass material, and that the boundaries between layers of the laminate structures effectively "guide" the vibrations from the excitation transducer to the spar cap, and from the spar cap to the sensing transducer. The spar cap 20C may also have an essentially laminate structure.

The identity of each transducer 10 can be configured by appropriate logic, as will be known to the skilled person, so that the excitation unit 111 can issue a burst excitation signal 10B (or any other suitable excitation signal) to a specific "transmitting" transducer 10 by enabling that transducer. Similarly, the evaluation unit 112 can enable a specific "receiving" transducer(s) from which to receive a signal generated in response to a sensed vibration burst $10B_{S1}$.

The extent of attenuation and distortion of the received signal will depend on various parameters such as the distance travelled, the width of the spar cap 20, the density of the materials in the signal path, etc. Such parameters remain essentially constant for any pair of transducers. However, during operation of the wind turbine, loads acting on the rotor blade 20 will result in stress/strain in the spar cap 20C, which in turn contributes to the attenuation and distortion of the signal $10B_{S1}$ arriving at the receiving transducer. For a spar cap, strain in the Z-direction (i.e. in the longitudinal span-wise direction) is of primary interest, because the spar caps are most affected by span-wise loading on the rotor blade. The diagram illustrates an exemplary rectangular region (indicated by the dashed line) in the spar cap 20C and the direction of strain ε through compression or extension when the rotor blade undergoes span-wise deflection as a result of wind loading.

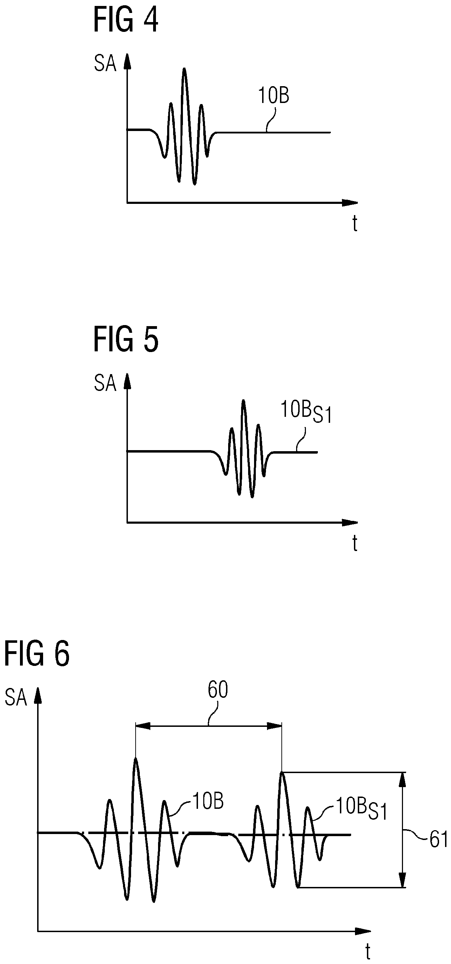

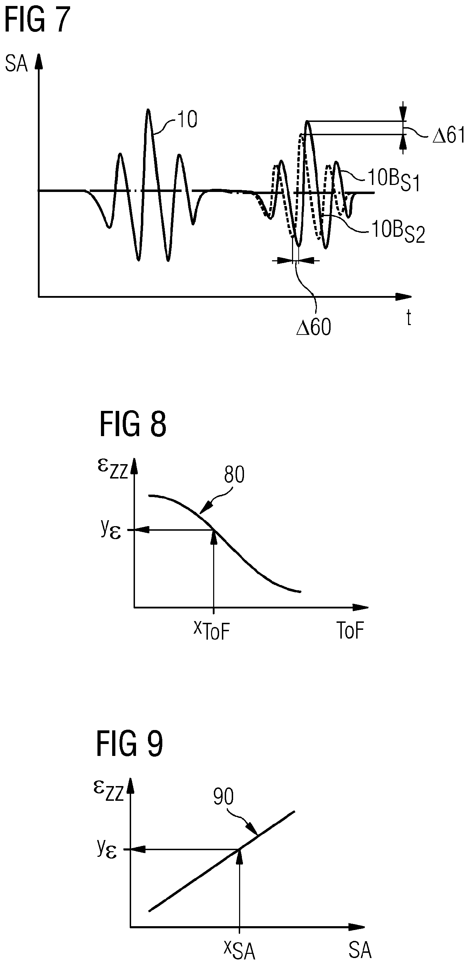

Signal distortion by the presence of the spar cap 20C is illustrated with the aid of Figures 4 - 7, which show signal amplitude SA (e.g. in Volts) against time t (e.g. in milliseconds). An exemplary excitation signal 10B in the form of a burst is shown in Figure 4. Figure 5 shows an attenuated and distorted version as signal $10B_{S1}$. Figure 6 shows both signals 10B, $10B_{S1}$ in the same time frame to illustrate the time-of-flight 60 or delay 60 between the transmitted signal 10B and the received signal $10B_{S1}$, and the largest amplitude 61 of the received signal $10B_{S1}$. The attenuated signal $10B_{S1}$ shown in Figure 5 may be measured for a non-loaded rotor blade, i.e. the spar cap 20C is not under any strain from loading. Figure 6 then shows a comparison between the excitation signal 10B and the received signal $10B_{S1}$ without any loading strain. Such measurements can be made for each transducer pair for multiple different loading situations during a calibration stage. Such measurements can be made for all new rotor blades of the same series and compared against benchmark measurements, as a part of quality control. Figure 7 illustrates a situation during loading of the rotor blade. The diagram shows the excitation signal 10B, the "non-loaded" received signal $10B_{S1}$, and a received signal $10B_{S2}$ obtained at the same transducer during a state in which the spar cap is under load. Depending on how the rotor blade is being loaded, span-wise deflection or bending of the rotor blade will result in stretching or compression of the spar cap 20C, and this in turn will affect the passage of the excitation signal. Therefore, the time of flight is different for the received signals $10B_{S1}$, $10B_{S2}$, and the time-of-flight difference Δ60 can be used to infer information about the loads acting on the spar cap, for example it is possible to infer the magnitude of the momentary load. Similarly, the peak-to-peak amplitude is different for both received signals $10B_{S1}$, $10B_{S2}$, and the difference Δ61 can also be used to infer information about the loads acting on the spar cap.

Such information can be collected for a wide range of loads, for example in a calibration setup which allows a rotor blade to be subject to known loads. The results can be collected and evaluated so that during operation of the wind turbine, a time-of-flight measurement or an amplitude measurement can be used to infer the momentary strain on the spar cap. This is illustrated in Figures 8 and 9, which show strain curves 80, 90. A first strain curve 80 is obtained by developing a relationship between Z-direction strain $\varepsilon_{ZZ}$ and time-of flight ToF, allowing strain ε to be expressed as a function of time-of flight:

$$\varepsilon_{ZZ} = f_1(ToF) \qquad (1)$$

A second strain curve 90 is obtained by developing a relationship between Z-direction strain $\varepsilon_{ZZ}$ and signal amplitude SA, allowing Z-direction strain $\varepsilon_{ZZ}$ to be deduced from the amount of attenuation:

$$\varepsilon_{ZZ} = f_2(SA) \qquad (2)$$

With such relationships established during a calibration procedure, or from data collected from various rotor blades over many hours of operation under known loading conditions, it is possible to relate a measured time-of-flight value $x_{ToF}$ or a measured attenuation value $x_{SA}$ to a specific strain value $y_\varepsilon$.

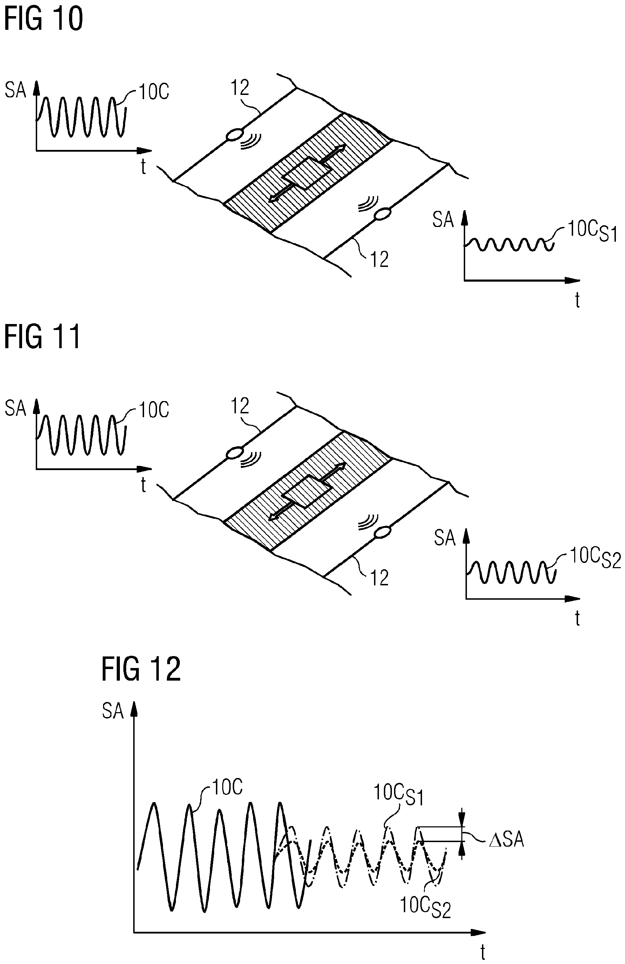

Figures 10 - 12 illustrate a further implementation of the inventive method. Here, instead of the burst signal discussed above, the excitation signal 10C can be continuous, for example a continuous sine wave. With this approach, only signal attenuation need be measured, and two exemplary received signals $10C_{S1}$, $10C_{S2}$ are shown for different strain conditions, for example signal $10C_{S1}$ may be received during a non-loaded state of the rotor blade as indicated in Figure 10, and signal $10C_{S2}$ may be received during a loaded state of the rotor blade as indicated in Figure 11. Figure 12 shows an exemplary graph showing the excitation signal 10C and the received signals $10C_{S1}$, $10C_{S2}$. The difference in peak-to-peak amplitude ΔSA can be used to infer the strain of the spar cap in Figure 11 from a relationship established during a calibration stage, similar to the method explained with the aid of Figures 4 to 7 above, allowing the load magnitude to be estimated.

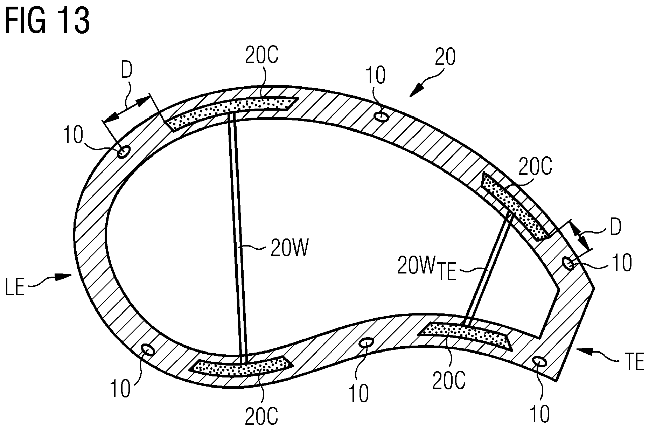

Figure 13 shows a cross-section through a rotor blade 20 according to a further embodiment of the invention. In this exemplary embodiment, the rotor blade 20 is equipped with additional spar caps 20C at either end of a shear web $20W_{TE}$ closer to the trailing edge TE of the rotor blade 20. To be able to measure the deformation of both sets of spar caps 20C when the rotor blade 20 is under load, three rows of piezo-electric transducers 10 are deployed - in essentially the same manner shown in Figure 1 - so that each spar cap 20C is between two rows of transducers 10. To estimate loads on a spar cap 20C, the "middle" transducer 10 can be actuated by an excitation signal as explained

6

above, and the transducer on the other side of that spar cap 20C will sense the vibration and generate an electrical signal in response.

Although the present invention has been disclosed in the form of preferred embodiments and variations thereon, it will be understood that numerous additional modifications and variations could be made thereto without departing from the scope of the invention. For example, the inventive method can be carried out as part of a structural health monitoring (SHM) procedure, by storing data collected during the lifetime of the rotor blade and by evaluating measured signals obtained under similar operating conditions. Structural deterioration of a rotor blade may be identified from unexpected measurements at known operating conditions, for example.

For the sake of clarity, it is to be understood that the use of "a" or "an" throughout this application does not exclude a plurality, and "comprising" does not exclude other steps or elements.

**Claims**

1. A wind turbine rotor blade (20) comprising

   - a reinforcement element (20C) embedded in the body of the rotor blade (20) and extending in a longitudinal direction of the rotor blade;
   - a number of piezo-electric transducers (10) arranged between the leading edge (LE) of the rotor blade (20) and the reinforcement element (20C);
   - a number of piezo-electric transducers (10) arranged between the reinforcement element (20C) and the trailing edge (TE) of the rotor blade (20);
   - a connector arrangement (12) configured to apply an excitation signal (10B, 10C) to any one of the piezo-electric transducers (10), and to transmit a sensed signal ($10B_{S1}$, $10B_{S2}$, $10C_{S1}$, $10C_{S2}$) from any one of the piezo-electric transducers (10) to an evaluation module (112).

2. A rotor blade according to claim 1, wherein a piezo-electric transducer (10) is configured to convert an electrical excitation signal (10B, 10C) into mechanical vibration and to convert mechanical vibration into a sensed signal ($10B_{S1}$, $10B_{S2}$, $10C_{S1}$, $10C_{S2}$).

3. A rotor blade according to any of the preceding claims, wherein a reinforcement element (20C) is realised as a spar cap of a spar (20W, 20C; $20W_{TE}$, 20C).

4. A rotor blade according to any of the preceding claims, comprising a plurality of piezo-electric transducers (10) on either side of a reinforcement element (20C).

5. A rotor blade according to any of the preceding claims, wherein a reinforcement element (20C) is arranged in a region of maximum airfoil thickness of the rotor blade (20).

6. A rotor blade according to any of the preceding claims, wherein a reinforcement element (20C) comprises a laminate structure.

7. A rotor blade according to any of the preceding claims, wherein the reinforcement element (20C) is made of carbon-fibre.

8. A wind turbine (2) comprising

   - a number of rotor blades (20) according to any of claims 1 to 7 mounted to a hub (21);
   - an excitation module (111) configured to apply an excitation signal (10B, 10C) to any one of the piezo-electric transducers (10); and
   - an evaluation module (112) configured to evaluate a signal ($10B_{S1}$, $10B_{S2}$, $10C_{S1}$, $10C_{S2}$) received from a piezo-electric transducer (10).

9. A wind turbine according to claim 8, wherein the evaluation module (112) is configured to compute the time-of-flight between an excitation signal (10B, 10C) and a received signal ($10B_{S1}$, $10B_{S2}$, $10C_{S1}$, $10C_{S2}$).

10. A wind turbine according to claim 8 or claim 9, wherein the evaluation module (112) is configured to compute the attenuation of a received signal ($10B_{S1}$, $10B_{S2}$, $10C_{S1}$, $10C_{S2}$) relative to the excitation signal (10B, 10C).

**11.** A method of measuring strain in a reinforcement element (20C) of a rotor blade (20) of a wind turbine (2) according to any of claims 8 to 10, which method comprises the steps of

- selecting a piezo-electric transducer (10) on one side of a reinforcement element (20C) of the rotor blade (20) ;
- operating the excitation module (111) to apply an excitation signal (10B, 10C) to the selected transducer (10) ;
- operating the evaluation module (112) to evaluate a signal ($10B_{S1}$, $10B_{S2}$, $10C_{S1}$, $10C_{S2}$) received by a piezo-electric transducer (10) on the other side of the reinforcement element (20C) to infer the magnitude of strain in the reinforcement element (20C).

**12.** A method according to claim 11, wherein the excitation signal is any of a tone burst (10B), a continuous sinusoidal signal (10C), a white noise signal, a chirp signal.

**13.** A method according to any of claims 11 to 12, comprising a step of evaluating sensed signals ($10B_{S1}$, $10B_{S2}$, $10C_{S1}$, $10C_{S2}$)under multiple known loading states of the rotor blade (20) in a calibration procedure.

**14.** A method according to any of claims 11 to 13, comprising a step of comparing evaluation results obtained during operation of the wind turbine (2) to evaluation results recorded during the calibration procedure.

**15.** A method according to any of claims 11 to 14, comprising a step of assessing the structural health of a rotor blade (20) from a comparison of evaluation results obtained during the lifetime of the rotor blade (20).

FIG 1

FIG 2

D

D

20C

D

20

10

20W

LE

10

TE

10

20C

D

D

FIG 3

10

10B

12

10B S1

20C

12

## FIG 4

SA

10B

t

## FIG 5

SA

10B$_{S1}$

t

## FIG 6

SA

60

10B

10B$_{S1}$

61

t

# FIG 7

# FIG 8

# FIG 9

## FIG 10

## FIG 11

## FIG 12

## FIG 13

Europäisches
Patentamt

European
Patent Office

Office européen
des brevets

## EUROPEAN SEARCH REPORT

Application Number

EP 21 15 5898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/128025 A1 (DRIVER HOWARD D [US]) 7 June 2007 (2007-06-07) | 1-6,8-12 | INV. F03D17/00 G01P15/09 |
| Y | * figures 2-3 * <br> * paragraph [0003] - paragraph [0007] * <br> * paragraph [0022] - paragraph [0023] * <br> * paragraph [0027] - paragraph [0034]; figures 5-8 * | 6,7, 13-15 | |
| A | EP 2 473 818 A1 (BAUMER INNOTEC AG [CH]) 11 July 2012 (2012-07-11) <br> * paragraph [0061] * <br> * paragraph [0067] - paragraph [0068] * | 1-15 | |
| Y | US 2013/195657 A1 (LAURITSEN STEEN M [DK] ET AL) 1 August 2013 (2013-08-01) <br> * paragraph [0046] - paragraph [0060] * <br> * paragraph [0080] - paragraph [0081] * | 13-15 | |
| Y | GB 2 485 595 A (VESTAS WIND SYS AS [DK]) 23 May 2012 (2012-05-23) <br> * page 7, line 1 - line 15; figure 2 * <br> * page 9, line 16 - line 34 * <br> * page 11, line 16 - line 32; figure 7 * | 6,7 | TECHNICAL FIELDS SEARCHED (IPC) <br><br> F03D <br> G01P |

The present search report has been drawn up for all claims

| Place of search | Date of completion of the search | Examiner |
|---|---|---|
| The Hague | 30 July 2021 | Tack, Gaël |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 4 039 971 A1**

**ANNEX TO THE EUROPEAN SEARCH REPORT
ON EUROPEAN PATENT APPLICATION NO.**

EP 21 15 5898

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2021

| Patent document cited in search report | | Publication date | Patent family member(s) | | Publication date |
|---|---|---|---|---|---|
| US 2007128025 | A1 | 07-06-2007 | CN | 1982697 A | 20-06-2007 |
| | | | DE | 102006057770 A1 | 05-07-2007 |
| | | | DK | 176792 B1 | 07-09-2009 |
| | | | US | 2007128025 A1 | 07-06-2007 |
| EP 2473818 | A1 | 11-07-2012 | EP | 2473818 A1 | 11-07-2012 |
| | | | WO | 2011026616 A1 | 10-03-2011 |
| US 2013195657 | A1 | 01-08-2013 | CA | 2803481 A1 | 05-01-2012 |
| | | | DK | 2588752 T3 | 17-08-2015 |
| | | | EP | 2588752 A2 | 08-05-2013 |
| | | | US | 2013195657 A1 | 01-08-2013 |
| | | | WO | 2012000509 A2 | 05-01-2012 |
| GB 2485595 | A | 23-05-2012 | NONE | | |

EPO FORM P0459

For more details about this annex : see Official Journal of the European Patent Office, No. 12/82

16